# FASCICULE DE BREVET EUROPEEN

(11) **EP 2 632 002 B1**
(45) Date de publication et mention de la délivrance du brevet: **18.06.2014**
(21) Numéro de dépôt: 12305204.5
(22) Date de dépôt: 22.02.2012
(51) Int. Cl.: H02G 3/08, H02G 3/14

(54) **Appareil électrique étanche à élément tampon**
Dichtes elektrisches Gerät mit Pufferelement
Sealed electrical appliance with buffer element

(43) Date de publication de la demande: 28.08.2013
(73) Titulaire: Berker GmbH & Co. KG, 58579 Schalksmühle (DE)
(72) Inventeur: Gatto, Davide, 25017 Lonato del Garda (BS) (IT); Barbero, Andrea, 25086 Rezzato (BS) (IT); Pirlo, Luigi, 25078 Vestone (BS) (IT); Salamina, Riccardo, 25018 Montichiari (BS) (IT); Poli, Massimiliano, 25080 Calvagese della Riviera (BS) (IT)
(74) Mandataire: Nuss, Laurent

(56) Documents cités:
- EP-A1- 1 253 609
- DE-U1- 9 110 236

## Description

Le domaine de la présente invention est celui des appareils pour installation électrique pour le bâtiment, et l'invention a plus particulièrement comme objet un appareil électrique particulier.

Lorsqu'un appareil électrique, du type interrupteur ou socle électrique, doit être compatible avec des normes d'étanchéité élevée, par exemple IP44, IP55 ou IP66, il est bien connu d'aménager un joint entre, d'une part, l'élément de montage, qu'il prenne la forme d'une boîte ou celle d'un cadre plat pour un montage encastré, et, d'autre part, le couvercle, qui vient être apposé contre ledit élément de montage. Le couvercle est ensuite fermement maintenu contre l'élément de montage, de sorte que la compression du joint entre les deux contribue à l'étanchéité et que la zone d'accueil du bloc électrique, traitant généralement des électricités dangereuses pour l'homme, soit inaccessible aux liquides, particules et autres poussières.

Un joint tel que décrit plus haut prend parfois la forme d'un joint s'étendant le long d'un contour fermé, suivant classiquement, par exemple, la bordure supérieure de l'éventuelle boîte de montage, voir par exemple EP 1 253 609. Ce joint peut aussi prendre la forme d'une membrane, comme dans DE 102 34 727 ou EP 0 122 465.

Néanmoins, ce joint, appelé joint d'interface dans la présente demande, est sujet au vieillissement, et ses propriétés élastiques, garantes de ses capacités d'étanchéité, viennent à se dégrader dans le temps. Comme le couvercle est normalement fixé et maintenu à une distance suffisamment proche de l'élément de montage pour que le joint d'interface soit compressé, la contrainte correspondante à cette déformation constante diminue progressivement dans le temps, sous l'effet du vieillissement. L'étanchéité procurée n'est donc plus optimale.

La présente invention a notamment pour but de pallier au moins cet inconvénient en proposant de compenser l'effet du vieillissement du joint d'interface en augmentant sa déformation de compression dès que la contrainte associée tend à diminuer.

A cet effet, l'invention a pour objet un appareil électrique, tel que, par exemple, interrupteur et/ou socle de connexion pour fiche électrique, destiné à être monté en saillie contre ou encastré dans une paroi, comprenant au moins un bloc fonctionnel électrique, un élément de montage pour le montage à la paroi et la fixation dudit au moins bloc fonctionnel, tel qu'une boîte pour un montage en saillie ou un support plat pour un montage encastré, et un couvercle, définissant un plan principal, formant la façade de l'appareil électrique visible après installation, et placé sur l'élément de montage.

Cet appareil électrique est caractérisé en ce qu'il comprend un joint d'interface entre l'élément de montage et le couvercle, ainsi qu'au moins un moyen de fixation de couvercle, apte à fixer ledit couvercle directement à l'élément de montage et comprenant au moins un élément tampon, déformé lorsque le couvercle est fixé à l'élément de montage et apte à compenser au moins partiellement, par une réduction progressive de sa propre déformation dans le temps, le vieillissement qui a lieu dans le joint d'interface.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- les figures 1 et 2 sont des vues en coupe d'un appareil électrique selon l'invention ;
- la figure 3 montre un verrou ainsi qu'une rondelle formant un élément tampon ;
- la figure 4 montre un verrou ;

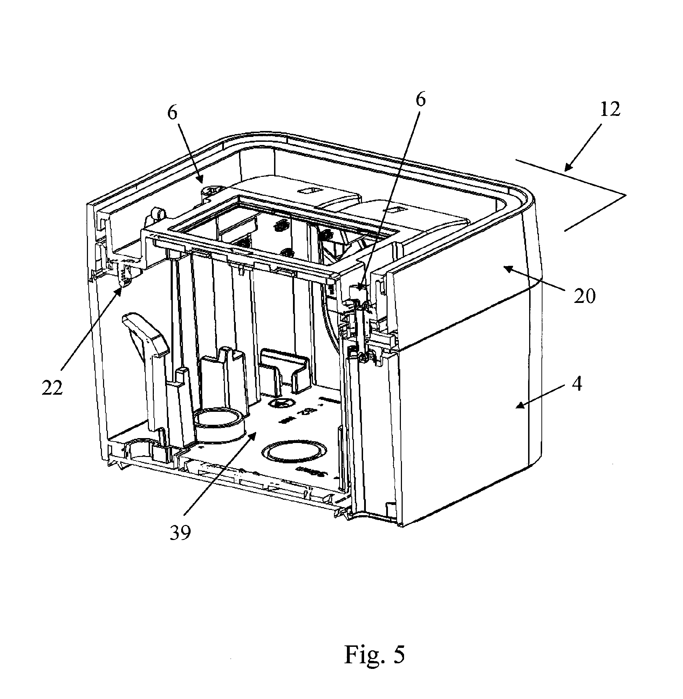

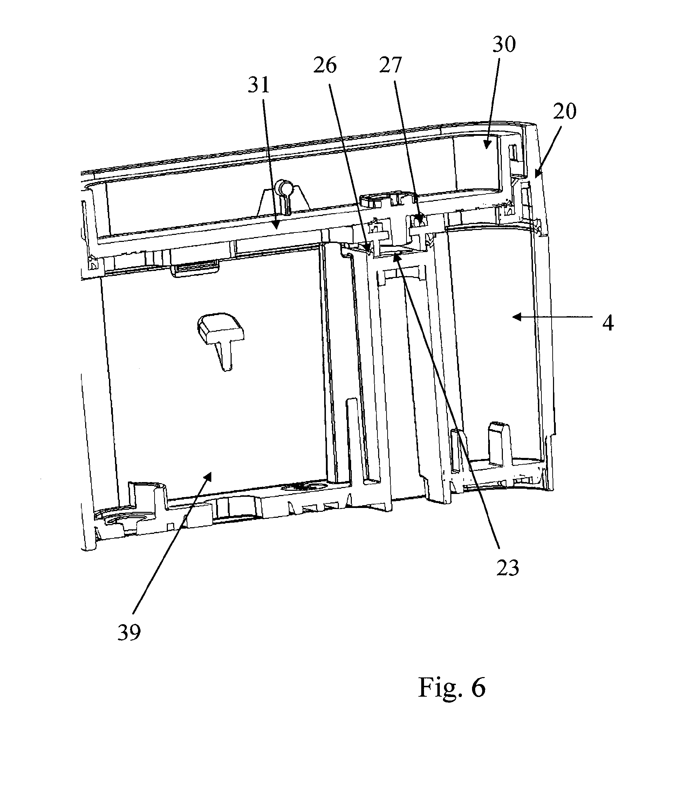

- les figures 5 et 6 sont des vues en coupe d'un appareil selon l'invention, où la manette de l'interrupteur a été enlevée ;

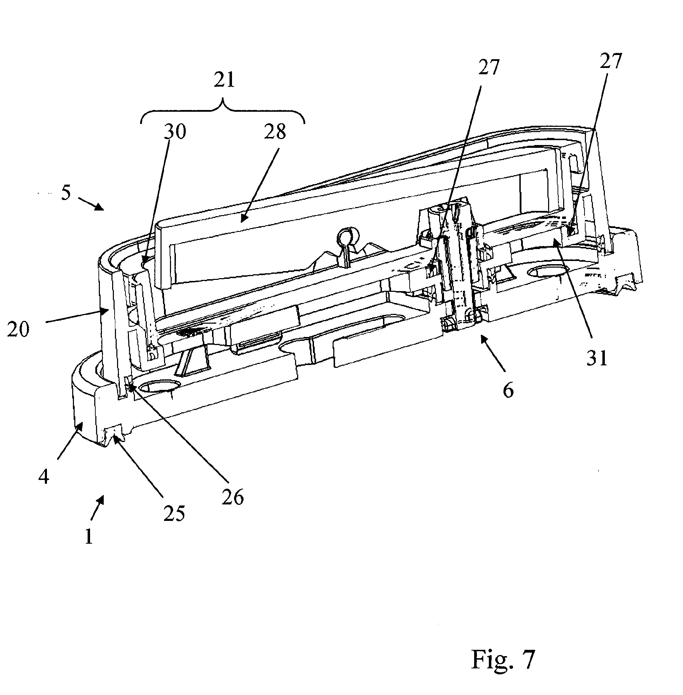

- la figure 7 montre, en coupe, un appareil électrique selon l'invention du type interrupteur encastré ;
- la figure 8 montre un détail de l'élément de montage et la figure 9 montre la partie correspondante au niveau du couvercle, et
- la figure 10 illustre le fonctionnement de l'élément tampon.

L'invention a donc pour objet un appareil électrique 1, tel que, par exemple, interrupteur et/ou socle de connexion pour fiche électrique, destiné à être monté en saillie contre ou encastré dans une paroi, comprenant au moins un bloc fonctionnel électrique, un élément de montage 4 pour le montage à la paroi et la fixation dudit au moins bloc fonctionnel, tel qu'une boîte pour un montage en saillie ou un support plat pour un montage encastré, et un couvercle 5, définissant un plan principal 12, formant la façade de l'appareil électrique 1 visible après installation, et placé sur l'élément de montage 4. Dans certains cas, le couvercle 5 peut permettre à l'utilisateur d'interagir avec le au moins un bloc fonctionnel, comme lui permettre de relier une fiche électrique à un bloc électrique du type socle ou de commuter un bloc fonctionnel du type interrupteur. Le couvercle 5 peut alternativement fermer entièrement l'élément de montage 4 en rendant inaccessible le au moins un bloc fonctionnel.

Dans le cas d'une fonction d'interrupteur, le au moins un bloc fonctionnel est alors commandé par au moins une manette 28 présente dans le couvercle 5 et sur laquelle un utilisateur peut agir, le bloc fonctionnel pouvant être monostable ou bistable, ladite au moins une manette 28 étant généralement amovible.

Le couvercle 5 peut aussi remplir une fonction d'affichage, en intégrant par exemple un écran. Comme il sera décrit plus loin, le couvercle 5 peut aussi prendre la forme d'une plaque 20 dans laquelle au moins un enjoliveur 21 est monté.

Lorsque l'appareil électrique 1 est mis en place, le plan principal 12 est parallèle à la paroi.

Selon l'invention, l'appareil électrique 1 comprend un joint d'interface 26 entre l'élément de montage 4 et le couvercle 5, ainsi qu'au moins un moyen de fixation 6 de couvercle 5, apte à fixer ledit couvercle 5 directement à l'élément de montage 4 et comprenant au moins un élément tampon 3, déformé lorsque le couvercle 5 est fixé à l'élément de montage 4 et apte à compenser au moins partiellement, par une réduction progressive de sa propre déformation dans le temps, le vieillissement qui a lieu dans le joint d'interface 26, ce vieillissement étant notamment dû à une relaxation de contrainte dans le joint d'interface 26, généralement fait en polymère. Il est aussi envisageable que le au moins un moyen de fixation 6 soit masqué par une manette 28 d'interrupteur, ce qui permet d'avoir un montage discret.

Le joint d'interface 26 permet de garantir l'étanchéité de la zone de contact entre l'élément de montage 4 et le couvercle 5, et il est donc comprimé dès lors que le couvercle 5 est correctement monté contre l'élément de montage 4, au moins tout de suite après le premier montage du couvercle 5. Le au moins un moyen de fixation 6 fixe directement le couvercle 5 à l'élément de montage 4, suffisamment proche pour que le joint d'interface 26 soit normalement comprimé. Il peut, par exemple, s'agir d'une simple vis. Un mode de réalisation avantageux du moyen de fixation 6 est décrit plus loin.

Dès lors que l'appareil électrique 1 est placé dans un environnement humide, il est nécessaire de garantir l'étanchéité au niveau du joint d'interface 26, et donc d'en garantir en permanence une bonne compression, et donc un état de contrainte associée élevé, généralement obtenu en lui imposant une déformation par compression conséquente. Il est donc important que le au moins un moyen de fixation 6 fixe le couvercle 5 à l'élément de montage 4 avec une force suffisante pour comprimer en permanence le joint d'interface 26 qui se trouve entre eux. Le moyen de fixation 6 exerce donc sur le couvercle 5 une force suffisante pour que le joint d'interface 26 soit comprimé, au moins après l'installation. Or, classiquement, le couvercle 5, une fois installé, reste dans sa position suffisamment proche de l'élément de montage 4 pour que le moyen de fixation 6 soit comprimé, mais n'est pas resserré après l'installation. La déformation imposée au joint d'interface 26 est donc constante.

Néanmoins, le joint d'interface 26 est sujet au vieillissement, notamment par la relaxation de contraintes, qui consiste essentiellement en une diminution progressive de la force qu'oppose le joint d'interface 26 à sa propre déformation, cette dernière résultant en effet du maintien en position du couvercle 5 contre l'élément de montage 4, sous l'action du au moins un moyen de fixation 6. Le vieillissement a donc pour effet de réduire les capacités du joint d'interface 26, et donc aussi l'étanchéité qu'il permet d'obtenir.

L'élément tampon 3 a ainsi comme effet de compenser progressivement dans le temps ce vieillissement, et plus particulièrement la relaxation de contraintes, en ralentissant la diminution de la pression exercée sur le joint d'interface 26, entre le couvercle 5 et l'élément de montage 4. Pour ce faire, c'est la déformation imposée au joint d'interface 26 qui est progressivement augmentée. En l'absence d'un tel élément tampon 3, c'est essentiellement la déformation du joint d'interface 26 que le au moins un moyen de fixation 6 maintient sensiblement constante, ce qui conduit à la relaxation de contraintes décrite ci-dessus. Comme il est décrit ci-dessous, l'élément tampon 3 réduit progressivement dans le temps l'espace disponible pour le joint d'interface 26, à mesure que le joint d'interface 26 oppose une moindre résistance à sa déformation.

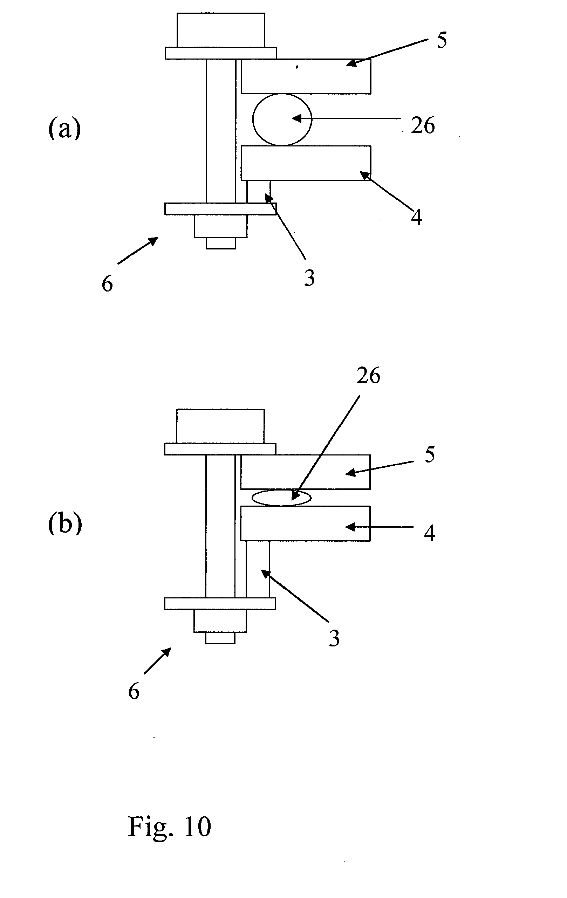

Les figures 10a et 10b illustrent le rôle de l'élément tampon 3. L'élément tampon 3, au même titre que le joint d'interface 26, se trouve initialement déformé par compression lorsque le couvercle 5 est monté contre l'élément de montage 4, voir la figure 10a, qui montre une situation où tant le joint d'interface 26 que l'élément tampon 3 sont déformés. En l'absence d'élément tampon 3, la déformation du joint d'interface 26 ne change pas, mais la pression associée sur le joint d'interface 26 diminue progressivement dans le temps, ce qui a pour effet de nuire à l'étanchéité. L'élément tampon 3 étant moins sujet à la relaxation de contraintes que le joint d'interface 26, le vieillissement de ce dernier vient être compensé par la diminution, dans le temps, de la déformation par compression de l'élément tampon 3, figure 10b.

Les déformations de compression, d'une part, de l'élément tampon 3, et, d'autre part, du joint d'interface 26 se compensent, alors que les forces qu'opposent ces éléments à leur propre déformation par compression sont nécessairement les mêmes, ces deux éléments étant en effet montés mécaniquement en série l'un de l'autre dans un encombrement sensiblement constant dans le temps. Ainsi, à partir de la configuration initiale de la figure 10a, lorsque, sous l'effet du vieillissement, la force qu'oppose le joint d'interface 26 à sa propre déformation par compression diminue progressivement dans le temps, sous l'effet du vieillissement, la déformation par compression de l'élément tampon 3 diminue elle aussi, voire figure 10b, ce dernier imprimant alors une déformation par compression de plus grande amplitude sur le joint d'interface 26. La déformation de l'élément tampon 3 étant imposée par l'état de contrainte du joint d'interface 26, la diminution progressivement dans le temps de cet état de contraintes s'accompagne, alors utilement, d'une réduction de la déformation de l'élément tampon 3. De par le montage en série, la diminution de la déformation de l'élément tampon 3 s'accompagne naturellement d'une augmentation de la déformation du joint d'interface 26.

Cette déformation par compression de plus grande amplitude du joint d'interface 26 se traduit par une augmentation de la force qu'oppose le joint d'interface 26 à sa déformation, se qui amène à une meilleure étanchéité. Les déformations et contraintes successives évoluent donc dans le temps de façon complémentaire : compte tenu du montage en série dans un logement de dimensions comparativement fixes, le joint d'interface 26 et l'élément tampon 3 sont donc en permanence dans des états de déformation qui, d'une part, sont complémentaires, dans le sens où l'augmentation de la déformation de l'un s'accompagnant de la diminution de la déformation de l'autre, et, d'autre part, correspondent à une égalité des forces que ces deux composants opposent dans leur état de déformation respectif. Cela permet de ralentir la réduction de la force associée à une déformation constante du joint d'interface 26.

L'élément tampon 3 a donc pour effet de réduire progressivement dans le temps l'espace disponible pour le joint d'interface 26. Cette réduction tend ainsi à compenser la diminution de la pression que subit le joint d'interface 26.

Selon une caractéristique additionnelle possible, qui permet notamment d'avoir un couvercle 5 en partie standardisé pour différents types d'appareil électrique 1, le couvercle 5 comprend, d'une part, une plaque 20 présentant au moins une ouverture 31, et, d'autre part, au moins un enjoliveur 21 compatible avec le au moins un bloc fonctionnel et placé dans ladite au moins une ouverture 31 ainsi qu'au moins un joint interne 27 installé entre ladite plaque 20 et ledit au moins un enjoliveur 21, le moyen de fixation 6 agissant sur le au moins un enjoliveur 21 de sorte que la plaque 20 est maintenue entre ledit au moins un enjoliveur 21 et l'élément de montage 4, l'élément tampon 3 étant apte, en outre, à compenser, par une réduction progressive de sa déformation, le vieillissement qui a lieu dans le au moins un joint interne 27, en particulier la relaxation de contraintes. La plaque 20 peut donc être standard, alors que l'enjoliveur 21 est propre au bloc fonctionnel. L'enjoliveur 21 peut être, par exemple, un enjoliveur 21 comprenant un puits 29 pour fiche électrique ou comprenant une manette 28 d'interrupteur et sa base 30. La compensation du vieillissement dans le au moins un joint interne 27 est la même que celle décrite pour le joint d'interface 26.

Comme le couvercle 5 est ainsi en au moins deux parties, à savoir la plaque 20 et au moins un enjoliveur 21, au moins un joint interne 27 doit être monté dans le couvercle 5 afin de garantir l'étanchéité du couvercle 5 lui-même. Préférentiellement, comme le joint d'interface 26, le joint interne 27 se présente sous la forme d'un profilé de matière s'étendant le long d'un contour fermé, placé autour de l'ouverture 31, tel qu'un joint torique ou un joint à lèvre. Le au moins un joint interne 27 peut être obtenu par surmoulage sur la plaque 20, voire l'enjoliveur 21, ou prendre la forme d'une pièce indépendante, monté dans le couvercle 5. Comme le au moins un moyen de fixation 6 agit sur l'enjoliveur 21 et que la plaque 20 est prise entre l'élément de montage 4 et l'enjoliveur 21, le vieillissement du joint interne 27, placé entre l'enjoliveur et la plaque 20, est, au même titre que pour le joint d'interface, entre la plaque 20 et l'élément de montage 4, compensé par l'élément tampon 3.

Dans certains modes de réalisations particuliers, l'appareil électrique 1 présente une pluralité de blocs fonctionnels, éventuellement différents, un seul couvercle 5, comprenant une seule plaque 20 et une pluralité d'enjoliveur 21, chaque enjoliveur 21 correspondant à un bloc fonctionnel, chaque enjoliveur 21 étant maintenu par au moins deux moyens de fixation 6. Dans ces réalisations, si l'appareil électrique 1 est multiposte, le couvercle 5 présente plusieurs enjoliveurs 21 et donc autant d'ouvertures 31 et de joints internes 27 garantissant l'étanchéité entre la plaque 20 et l'enjoliveur 21. Dans ce cas, il est particulièrement intéressant de réaliser les joints internes 27 d'un seul tenant.

Selon une caractéristique additionnelle possible, le au moins un moyen de fixation 6 de couvercle 5 est apte, d'une part, dans une position dite verrouillée d'un verrou 7 que comprend le au moins un moyen de fixation 6, à maintenir le couvercle 5 directement par rapport à l'élément de montage 4, et, d'autre part, dans une position dite libre dudit verrou 7, à ne pas maintenir le couvercle 5 par rapport à l'élément de montage 4, le passage de la position verrouillée à la position libre se faisant par une rotation de moins d'un tour dudit verrou 7 autour d'un axe 8 sensiblement perpendiculaire au plan principal 12, notamment d'un quart de tour, ce qui permet de rendre le montage du couvercle 5 sur l'élément de montage 4 particulièrement ergonomique.

Préférentiellement, le passage de la position verrouillée à la position libre se fait sans translation parallèle à l'axe 8, ce qui permet à l'installateur de ne pas assimiler ce mouvement de verrouillage ou déverrouillage à un mouvement de fixation d'une vis munie d'un filetage.

En position de verrouillage, une extrémité du verrou 7 est en appui sur le couvercle 5, préférentiellement sur la plaque 20, notamment sur la base 30 pour un interrupteur, l'autre extrémité venant en appui dans l'élément de montage 4, ce qui permet donc à l'au moins un moyen de fixation 6 de maintenir directement le couvercle 5 à l'élément de montage 4.

Selon une caractéristique additionnelle possible, le verrou 7 prend essentiellement la forme d'une tige 10, présentant un corps 11 ainsi que, d'une part, une tête 9 pour son actionnement, ledit corps 11 étant plus fin que ladite tête 9, et, d'autre part, une pointe 17 présentant au moins une aile 18, faisant saillie par rapport au corps 11 de la tige 10, ce qui permet de retenir le verrou 7 par rapport à l'élément de montage 4 et par rapport au couvercle 5, d'une part, grâce à ladite au moins une aile 18 en appui dans l'élément de montage 4, et, d'autre part, grâce à la tête 9 en appui dans le couvercle 5. Le fait de passer de la position de verrouillage à la position libre a pour effet de dégager de sa butée la tête 9 et/ou la au moins une aile 18 de la pointe 17.

Selon une caractéristique additionnelle possible, qui permet à un installateur, muni d'outils classiques, de réaliser l'installation, des rainures 19 pour l'actionnement au moyen d'un outil plat du type tournevis sont prévues sur le verrou 7, notamment sur la ou une tête 9 d'une tige 10 qui forme le verrou 7. C'est grâce à ces rainures que l'installateur peut créer le mouvement de rotation permettant de passer de la position verrouillée à la position libre et inversement.

Selon une caractéristique additionnelle possible, qui permet de maintenir le couvercle 5 à l'aide du au moins un verrou 7, dans une position dans laquelle le joint d'interface 26 et le au moins un éventuel joint interne 27 sont comprimés, le au moins un moyen de fixation 6 comprend au moins une surface d'appui de verrouillage 13 pour le verrou 7, contre laquelle ce dernier peut s'appuyer pour maintenir le couvercle 5 à l'élément de montage 4 dans la position verrouillée, notamment une surface d'appui de verrouillage 13 aménagée sur l'élément tampon 3. Le couvercle 5 est donc maintenu contre l'élément de montage 4 par le verrou 7, en appui, pour sa tête 9, dans le couvercle 5, et, pour sa pointe 17, notamment l'aile 18, sur la surface d'appui de verrouillage 13. Lorsque le verrou 7 est en appui contre la surface d'appui de verrouillage 13, le couvercle 5 est maintenu suffisamment proche de l'élément de montage 4 pour que l'élément tampon 3 et 1 joint d'interface 26 soient comprimés, de façon complémentaire comme décrit plus haut, ainsi que, de la même façon, l'au moins un éventuel joint interne 27.

Selon une autre caractéristique additionnelle possible, facilitant la mise en place du couvercle 5, le au moins un moyen de fixation 6 comprend au moins une surface de guidage 14 dans le prolongement de la au moins une surface d'appui de verrouillage 13, sur laquelle le verrou 7 peut circuler jusqu'à la au moins une surface d'appui de verrouillage 13 en rapprochant le couvercle 5 de l'élément de montage 4. Ainsi, pour passer de la position libre à la position verrouillée, l'aile circule sur la surface de guidage 14, qui a une forme hélicoïdale, ce qui a pour effet de rapprocher le couvercle 5 de l'élément de montage 4, et donc de comprimer l'élément tampon 3 et le joint d'interface 26, ainsi que l'au moins un éventuel joint interne 27. Il n'est donc pas nécessaire de presser le couvercle 5 contre l'élément de montage 4 avant de passer de la position libre à la position de verrouillage, puisque la circulation sur la surface de guidage 14 a pour effet de rapprocher le couvercle 5 de l'élément de montage 4. Le montage du couvercle est donc plus facile pour l'installateur.

La surface de guidage 14 prend donc une forme d'hélice qui transforme le mouvement de rotation du verrou 7 en un mouvement de translation. Lorsque le verrou 7 est en position verrouillée, l'aile 18 est en appui contre la surface d'appui de verrouillage 13. Un mouvement inverse doit être effectué pour passer de la position de verrouillage à la position libre. L'aile 18 quitte alors la surface d'appui de verrouillage 13 et circule sur la surface de guidage 14, permettant progressivement à la tête 9 de s'éloigner de l'élément de montage 4 est donc au couvercle 5, pris entre eux, de s'en écarter aussi. Comme il sera décrit plus loin, l'aile 18 aboutit ensuite au niveau d'un premier dégagement 16 aménagé dans l'élément de montage 4, ce qui permet d'en détacher complètement le couvercle 5, puisque l'aile 18 n'est alors plus retenue contre l'élément de montage 4 mais peut librement circuler le premier dégagement 16.

Selon une caractéristique additionnelle possible, l'élément tampon 3 porte la au moins une surface d'appui de verrouillage 13 ainsi que la au moins une surface de guidage 14 et prend la forme d'une pièce rapportée 15, placée au sein de l'élément de montage 4, et déformée lorsque le verrou 7 se trouve dans la position de verrouillage. Le recours à une pièce rapportée permet de faciliter la fabrication de l'élément de tampon 4. Selon une caractéristique additionnelle possible, la pièce rapportée 15 est une rondelle métallique, ce qui garantit une plus longue durée de la compensation du vieillissement. Cette rondelle métallique est placée dans l'élément de montage 4, et présente une découpe lui permettant d'être traversée par la pointe 17 du verrou 7, notamment une découpe sous la forme d'un trou oblong dans le cas où la pointe 17 présente deux ailes 18.

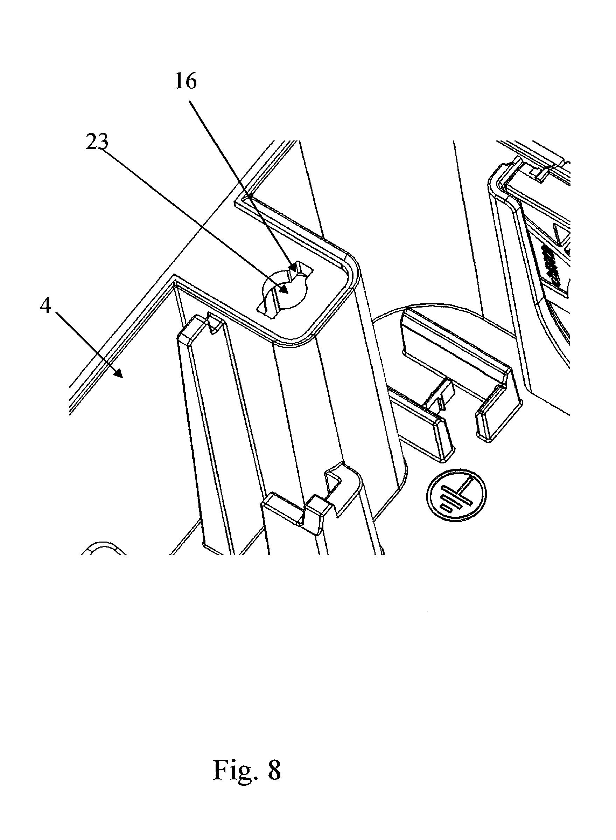

Comme le montre la figure 8, le au moins un moyen de fixation 6 présente, au niveau de l'élément de montage 4, un premier orifice 23 dans lequel le corps 11 de la tige 10 peut glisser et pivoter, ainsi qu'au moins un premier dégagement 16 dans lequel la au moins une aile 18 peut glisser lorsque le verrou 7 se trouve dans la position libre, permettant ainsi de dégager le couvercle 5 et le verrou 7 par rapport à l'élément de montage 4 lorsque ledit verrou 7 se trouve dans la position libre

En outre, comme le montre encore la figure 8, le au moins un moyen de fixation 6 présente un orifice de passage 38, aménagé dans le couvercle 5, notamment dans le au moins un enjoliveur 21 ou un enjoliveur 21 que comprend le couvercle 5, dans lequel le corps 11 de la tige 10 peut glisser et pivoter mais dans lequel la tête 9 ne peut pas circuler, ainsi qu'au moins un deuxième dégagement 32 dans lequel la au moins une aile 18 peut glisser.

L'orifice de passage 38 et le deuxième dégagement 32 sont aménagés au sein d'un plot creux 24 du couvercle 5 accueilli dans un passage 37 dans la plaque 20 ou une plaque 20 que comprend le couvercle 5, permettant ainsi de dégager le au moins un verrou 7 du couvercle 5 en y faisant passer la pointe 17. Si le au moins un deuxième dégagement 32 du couvercle 5 est situé en vis-à-vis du premier dégagement 16 de l'élément de montage 4 lorsque le couvercle 5 est monté sur ledit élément de montage 4, le verrou 7 peut, dans sa position libre, être dégagé à la fois du couvercle 5 et de l'élément de montage 4.

Dans des modes de réalisation particulièrement avantageux, la pointe 17 est munie de deux ailes 18 en saillie par rapport au corps 11 de la tige 10 et diamétralement opposées, la position libre et la position verrouillée étant séparées par une rotation d'un quart de tour. Les divers autres éléments du moyen de fixation 6 ainsi que l'appareil 1 lui-même sont adaptés à ce nombre d'ailes 18 : l'orifice de passage 38 est muni de deux deuxièmes dégagements 32 diamétralement opposés, le premier orifice 23 est muni de deux premiers dégagements 16 diamétralement opposés permettant ainsi de passer de la position libre à la position verrouillée indépendamment du sens de rotation du au moins un verrou 7, le moyen de fixation 6 présente deux surfaces d'appui de verrouillage 13 diamétralement opposées ainsi que deux surfaces de guidage 14 adaptées, la pièce rapportée 15 présentant un trou oblong pour le passage simultané des deux ailes 18. Bien entendu, un nombre différent d'ailes 18 et des écarts angulaires différents sont envisageables.

Selon une caractéristique additionnelle possible de l'appareil électrique 1, le au moins un moyen de fixation 6 présente au moins un ergot 34 et au moins un logement 35 pour ledit ergot 34, aménagés de sorte à limiter la translation du verrou 7, par rapport au couvercle 5, parallèlement à l'axe 8, notamment un logement 35 sous forme de rainure circonférentielle, l'ergot 34 et le logement 35 étant, pour l'un, aménagé au niveau du verrou 7, et, pour l'autre, au niveau du couvercle 5, notamment au niveau de l'enjoliveur 21 ou d'un enjoliveur 21 que comprend le couvercle 5. Cela permet de maintenir au moins légèrement le verrou 7 dans le couvercle 5, dans la direction de l'axe 8, et garantit donc l'imperdabilité du verrou 7.

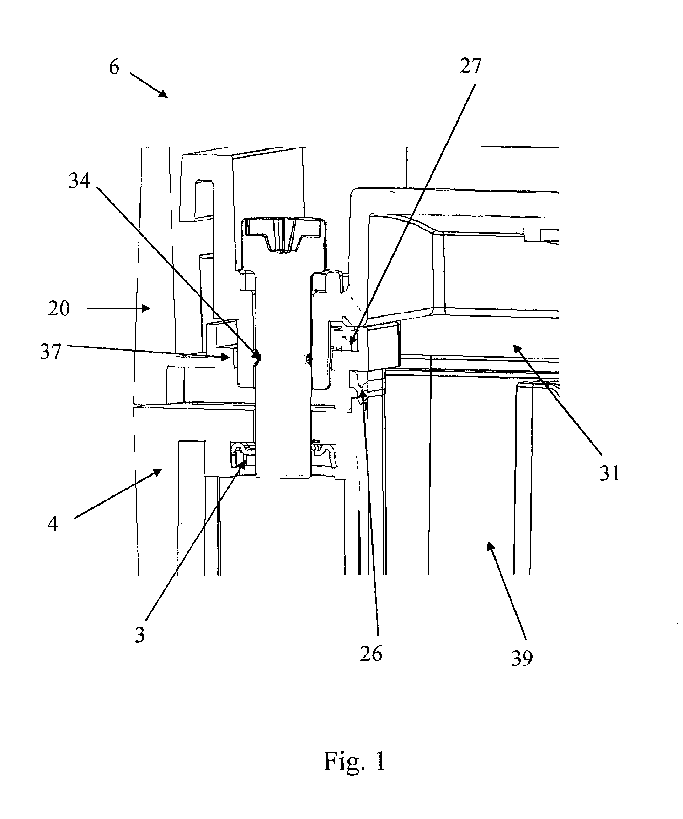

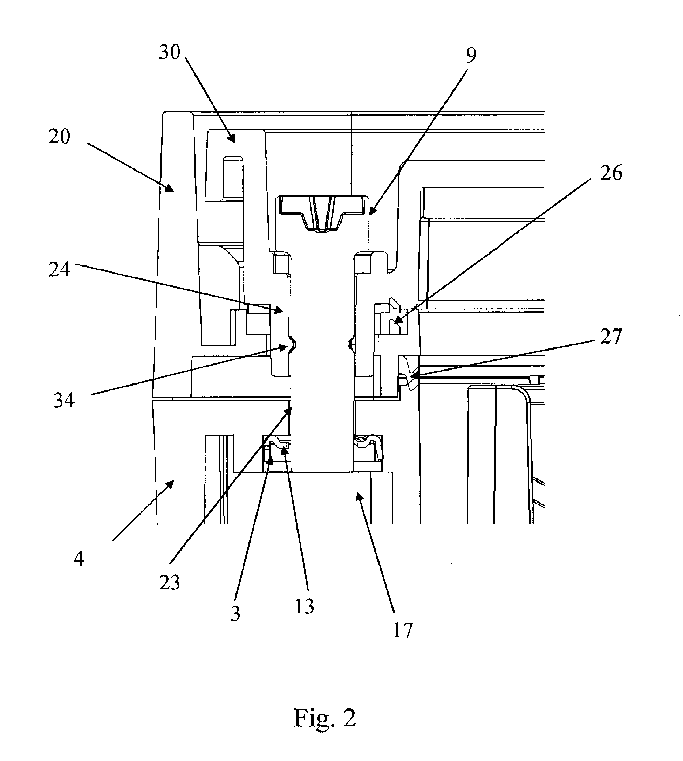

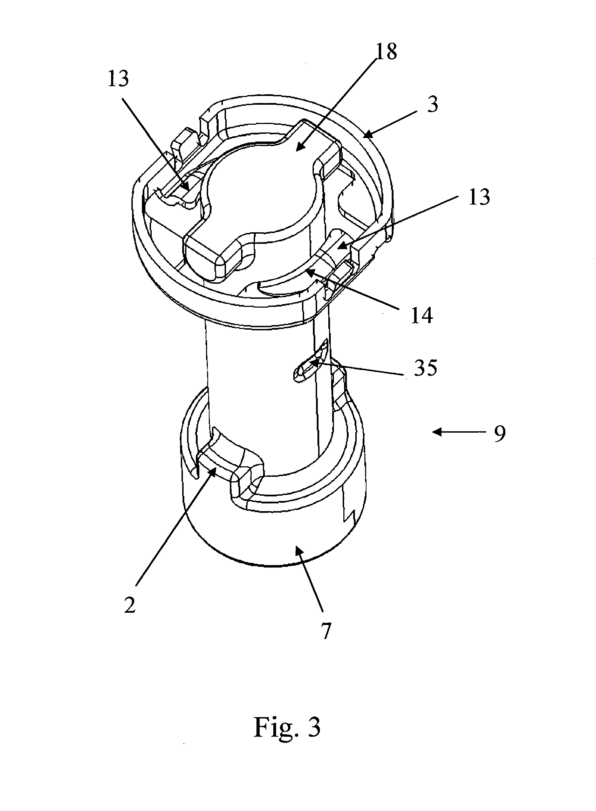

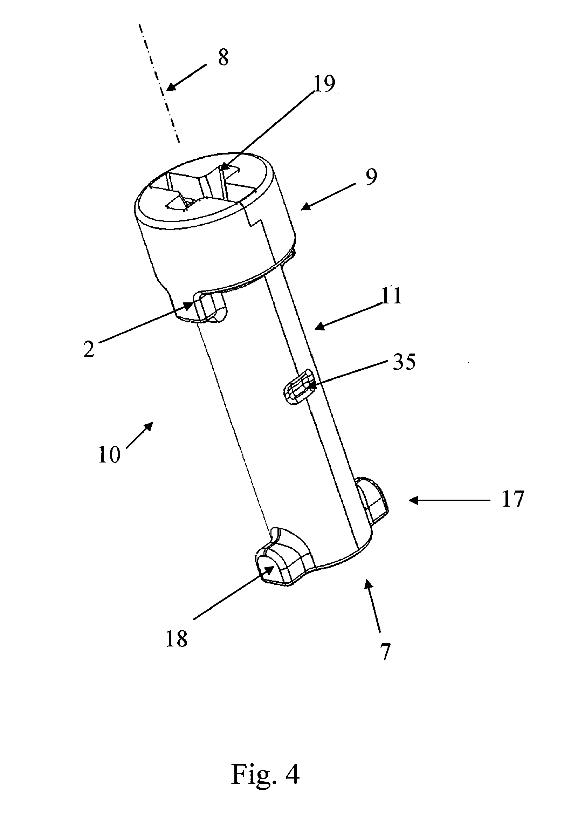

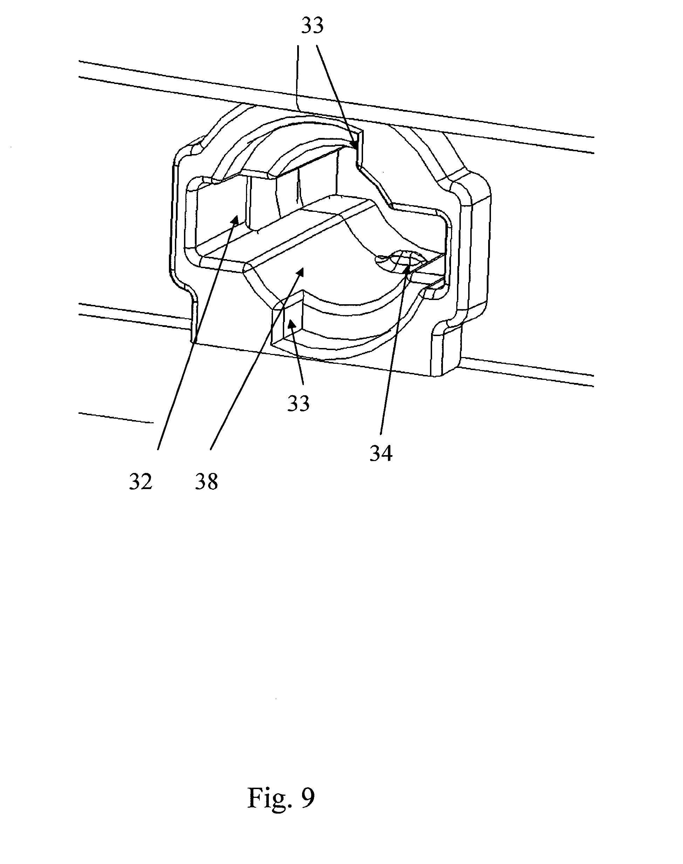

Préférentiellement, le au moins un ergot 34 et le au moins un logement 35 sont aménagés de sorte à limiter, en outre, la rotation du verrou 7 autour de l'axe 8 sensiblement à partir de la position libre. Les figures 1 à 4 et 9 montrent que le couvercle 5, et plus précisément la plaque 20, présente un ergot 34 qui vient dans un logement 35 du verrou 7, de dimensions correspondantes, permettant ainsi de maintenir le verrou 7 par rapport au couvercle 5, tant dans un déplacement axial perpendiculaire au plan principal 12, c'est-à-dire dans un déplacement axial le long de l'axe 8, que dans une rotation autour de cet axe 8.

L'imperdabilité du verrou 7 est donc garantie, puisqu'il est maintenu dans le couvercle 5. En outre, l'installateur sait que lorsque le verrou 7 se stabilise dans une position angulaire, cette dernière correspond à la position libre. Ainsi, le verrou 7 peut être mis dans la position libre avant de procéder au montage et maintenu jusqu'à procéder à la fixation du couvercle 5 sur l'élément de montage 4 par rotation du verrou 7 entre la position libre et la position de verrouillage. La figure 1 montre que l'ergot 34 est monté dans le plot creux 24. De par l'élasticité de ce dernier, il reste possible de dégager l'ergot 34 du logement 35 par une rotation du verrou 7.

Selon une caractéristique additionnelle possible, le au moins un moyen de fixation 6 présente, d'une part, au moins un élément de butée 2, aménagé au niveau du verrou 7, et notamment sous la tête 9 ou une tête 9 d'une tige 10 que comprend le verrou 7, et, d'autre part, au moins une face de butée 33, aménagée dans le couvercle 5 et au contact de laquelle vient le au moins un élément de butée 2 lorsque le verrou 7 se trouve dans la position de verrouillage ou lorsqu'il subit un mouvement de rotation de plus grande amplitude que celle nécessaire lors du passage de la position libre à la position de verrouillage, ce qui permet d'éviter que l'installateur ne manipule le verrou 7 comme une vis tournant dans le vide et ait ainsi l'impression que l'appareil électrique 1 est défectueux, mais aussi d'éviter la dégradation de l'appareil électrique 1 si l'installateur fait subir au verrou 7 un mouvement trop ample ou un couple trop important.

Selon une caractéristique additionnelle possible, le au moins un enjoliveur 21 est maintenu par deux moyens de fixation 6, disposés à proximité de deux bords opposés dudit enjoliveur 21 et décalés l'un par rapport à l'autre, l'appareil électrique 1 comprenant en outre, deux moyens d'accrochage 22 de l'enjoliveur 21 à la plaque 20, disposés symétriquement aux deux verrous 7, et consistant essentiellement chacun en une patte munie de crochets et s'étendant à partir de l'enjoliveur 21, destinée à venir s'accrocher dans un trou prévu dans la plaque 20, permettant ainsi d'avoir une bonne tenue mécanique et une bonne fixation du couvercle 5 sur l'élément de montage 4 tout en limitant le nombre d'opérations à réaliser par l'installateur ainsi que le prix d'un tel appareil électrique 1.

Selon une caractéristique additionnelle possible, l'appareil électrique 1 comprend, en outre, un joint arrière 25, au niveau de la face de l'élément de montage 4 destinée à être en contact avec la paroi, le joint d'interface 26 et le au moins un joint interne 27 étant réalisés d'un seul tenant, notamment par surmoulage sur le couvercle 5 ou sur la ou une plaque 20 que comprend le couvercle 5, permettant ainsi de garantir une étanchéité supplémentaire entre le mur et l'appareil électrique 1.

Dans un mode de réalisation particulier, l'élément de montage 4 consiste en une boîte pour le montage en saillie de l'appareil électrique 1, présentant une cavité d'accueil 39 pour le au moins un bloc fonctionnel, le verrou 7 aboutissant, pour une de ses extrémités, notamment la ou une pointe 17, au sein de l'élément de montage 4 dans une zone ne communicant pas avec la cavité d'accueil 39, la boîte présentant notamment, en outre, des crochets pour l'encliquetage du au moins un bloc fonctionnel. Le fait que le verrou 7 aboutit hors de la cavité d'accueil 39 évite que les différents orifices aménagés pour l'accueillir ne permettent d'amener de l'eau ou d'autres particules trop proches de l'appareil électrique 1.

Bien entendu, l'invention n'est pas limitée au mode de réalisation décrit et représenté aux dessins annexés. Des modifications restent possibles, notamment du point de vue de la constitution des divers éléments, par combinaison différente des caractéristiques décrites, ou par substitution d'équivalents techniques, sans sortir pour autant du domaine de protection de l'invention.

## Revendications

1. Appareil électrique (1), tel que, par exemple, interrupteur et/ou socle de connexion pour fiche électrique, destiné à être monté en saillie contre ou encastré dans une paroi, comprenant au moins un bloc fonctionnel électrique, un élément de montage (4) pour le montage à la paroi et la fixation dudit au moins bloc fonctionnel, tel qu'une boîte pour un montage en saillie ou un support plat pour un montage encastré, et un couvercle (5), définissant un plan principal (12), formant la façade de l'appareil électrique (1) visible après installation, et placé sur l'élément de montage (4), ledit appareil électrique (1) comprenant
un joint d'interface (26) entre l'élément de montage (4) et le couvercle (5), ainsi qu'au moins un moyen de fixation (6) de couvercle (5), apte à fixer ledit couvercle (5) directement à l'élément de montage (4) et comprenant au moins un élément tampon (3), déformé lorsque le couvercle (5) est fixé à l'élément de montage (4) et apte à compenser au moins partiellement, par une réduction progressive de sa propre déformation dans le temps, le vieillissement qui a lieu dans le joint d'interface (26), **caractérisé en ce que** le au moins un moyen de fixation (6) comprend au moins une surface de guidage (14) sur laquelle un verrou (7) que comprend ledit moyen de fixation (6) peut circuler pour passer d'une position libre à une position verrouillée en rapprochant le couvercle (5) de l'élément de montage (4).

2. Appareil électrique (1) selon la revendication 1, **caractérisé en ce que** le couvercle (5) comprend, d'une part, une plaque (20) présentant au moins une ouverture (31), et, d'autre part, au moins un enjoliveur (21) compatible avec le au moins un bloc fonctionnel et placé dans ladite au moins une ouverture (31) ainsi qu'au moins un joint interne (27) installé entre ladite plaque (20) et ledit au moins un enjoliveur (21), le moyen de fixation (6) agissant sur le au moins un enjoliveur (21) de sorte que la plaque (20) est maintenue entre ledit au moins un enjoliveur (21) et l'élément de montage (4), l'élément tampon (3) étant apte, en outre, à compenser, par une réduction progressive de sa déformation, le vieillissement qui a lieu dans le au moins un joint interne (27).

3. Appareil électrique (1) selon l'une quelconque des revendications 1 ou 2, **caractérisé en ce que**
le au moins un moyen de fixation (6) de couvercle (5) est apte, d'une part, dans une position dite verrouillée d'un verrou (7) que comprend le au moins un moyen de fixation (6), à maintenir le couvercle (5) directement par rapport à l'élément de montage (4), et, d'autre part, dans une position dite libre dudit verrou (7), à ne pas maintenir le couvercle (5) par rapport à l'élément de montage (4), le passage de la position verrouillée à la position libre se faisant par une rotation de moins d'un tour dudit verrou (7) autour d'un axe (8) sensiblement perpendiculaire au plan principal (12).

4. Appareil électrique (1) selon la revendication 3, **caractérisé en ce que** le verrou (7) prend essentiellement la forme d'une tige (10), présentant un corps (11) ainsi que, d'une part, une tête (9) pour son actionnement, ledit corps (11) étant plus fin que ladite tête (9), et, d'autre part, une pointe (17) présentant au moins une aile (18), faisant saillie par rapport au corps (11) de la tige (10).

5. Appareil électrique (1) selon l'une quelconque des revendications 3 ou 4, **caractérisé en ce que** le au moins un moyen de fixation (6) comprend au moins une surface d'appui de verrouillage (13) pour le verrou (7), contre laquelle ce dernier peut s'appuyer pour maintenir le couvercle (5) à l'élément de montage (4) dans la position verrouillée, notamment une surface d'appui de verrouillage (13) aménagée sur l'élément tampon (3).

6. Appareil électrique (1) selon la revendication 5, **caractérisé en ce que** le au moins un moyen de fixation (6) comprend au moins une surface de guidage (14) dans le prolongement de la au moins une surface d'appui de verrouillage (13), sur laquelle le verrou (7) peut circuler jusqu'à la au moins une surface d'appui de verrouillage (13) en rapprochant le couvercle (5) de l'élément de montage (4).

7. Appareil électrique (1) selon la revendication 6, **caractérisé en ce que** l'élément tampon (3) porte la au moins une surface d'appui de verrouillage (13) ainsi que la au moins une surface de guidage (14) et prend la forme d'une pièce rapportée (15), placée au sein de l'élément de montage (4), et déformée lorsque le verrou (7) se trouve dans la position de verrouillage.

8. Appareil électrique (1) selon la revendication 7 **caractérisé en ce que** la pièce rapportée (15) est une rondelle métallique.

9. Appareil électrique (1) selon l'une quelconque des revendications 3 à 8, **caractérisé en ce que** le au moins un moyen de fixation (6) présente au moins un ergot (34) et au moins un logement (35) pour ledit ergot (34), aménagés de sorte à limiter la translation du verrou (7), par rapport au couvercle (5), parallèlement à l'axe (8), notamment un logement (35) sous forme de rainure circonférentielle, l'ergot (34) et le logement (35) étant, pour l'un, aménagé au niveau du verrou (7), et, pour l'autre, au niveau du couvercle (5), notamment au niveau de l'enjoliveur (21) ou d'un enjoliveur (21) que comprend le couvercle (5).

10. Appareil électrique (1) selon la revendication 9, **caractérisé en ce que** le au moins un ergot (34) et le au moins un logement (35) sont aménagés de sorte à limiter, en outre, la rotation du verrou (7) autour de l'axe (8) sensiblement à partir de la position libre.

11. Appareil électrique (1) selon l'une quelconque des revendications 3 à 10, **caractérisé en ce que** le au moins un moyen de fixation (6) présente, d'une part, au moins un élément de butée (2), aménagé au niveau du verrou (7), et notamment sous la tête (9) ou une tête (9) d'une tige (10) que comprend le verrou (7), et, d'autre part, au moins une face de butée (33), aménagée dans le couvercle (5) et au contact de laquelle vient le au moins un élément de butée (2) lorsque le verrou (7) se trouve dans la position de verrouillage ou lorsqu'il subit un mouvement de rotation de plus grande amplitude que celle nécessaire lors du passage de la position libre à la position de verrouillage.

12. Appareil électrique (1) selon l'une quelconque des revendications 3 à 11 **caractérisé en ce que** des rainures (19) pour l'actionnement au moyen d'un outil plat du type tournevis sont prévues sur le verrou (7), notamment sur la ou une tête (9) d'une tige (10) qui forme le verrou (7).

13. Appareil électrique (1) selon l'une quelconque des revendications 2 à 12 **caractérisé en ce que** le au moins un enjoliveur (21) est maintenu par deux moyens de fixation (6), disposés à proximité de deux bords opposés dudit enjoliveur (21) et décalés l'un par rapport à l'autre, l'appareil électrique (1) comprenant en outre, deux moyens d'accrochage (22) de l'enjoliveur (21) à la plaque (20), disposés symétriquement aux deux verrous (7), et consistant essentiellement chacun en une patte munie de crochets et s'étendant à partir de l'enjoliveur (21), destinée à venir s'accrocher dans un trou prévu dans la plaque (20).

14. Appareil électrique (1) selon l'une quelconque des revendications 1 à 13, **caractérisé en ce que** l'appareil électrique (1) comprend, en outre, un joint arrière (25), au niveau de la face de l'élément de montage (4) destinée à être en contact avec la paroi, le joint d'interface (26) et le au moins un joint interne (27) étant réalisés d'un seul tenant, notamment par surmoulage sur le couvercle (5) ou sur la ou une plaque (20) que comprend le couvercle (5).

15. Appareil électrique (1) selon l'une quelconque des revendications 1 à 14, **caractérisé en ce que** l'élément de montage (4) consiste en une boîte pour le montage en saillie de l'appareil électrique (1), présentant une cavité d'accueil (39) pour le au moins un bloc fonctionnel, le verrou (7) aboutissant, pour une de ses extrémités, notamment la ou une pointe (17), au sein de l'élément de montage (4) dans une zone ne communicant pas avec la cavité d'accueil (39), la boîte présentant notamment, en outre, des crochets pour l'encliquetage du au moins un bloc fonctionnel.

16. Appareil électrique (1) selon l'une quelconque des revendications 1 à 15, **caractérisé en ce qu'**il présente une pluralité de blocs fonctionnels, éventuellement différents, un seul couvercle (5), comprenant une seule plaque (20) et une pluralité d'enjoliveur (21), chaque enjoliveur (21) correspondant à un bloc fonctionnel, chaque enjoliveur (21) étant maintenu par au moins deux moyens de fixation (6).

## Patentansprüche

1. Elektrisches Gerät (1), wie beispielsweise ein Schalter und/oder ein Verbindungssockel für elektrische Verbindungsstecker, ausgelegt, vorspringend an oder unter Putz in einer Wand montiert zu werden, umfassend wenigstens einen elektrischen Funktionsblock, ein Montageelement (4) für die Montage an der Wand und zur Befestigung des wenigstens einen Funktionsblocks, wie etwa ein Gehäuse für eine vorspringende Montage oder ein flacher Träger für eine Unterputzmontage, und einen Deckel (5), der eine Hauptebene (12) definiert, die sichtbare Vorderseite des elektrischen Geräts (1) nach der Installation bildet und auf dem Montageelement (4) angeordnet ist, wobei das elektrische Gerät (1) eine Schnittstellendichtung (26) zwischen dem Montageelement (4) und dem Deckel (5) sowie wenigstens ein Fixierungsmittel (6) des Deckels (5), das geeignet ist, den Deckel (5) direkt am Montageelement (4) zu befestigen und wenigstens ein Pufferelement (3) umfasst, das sich verformt, wenn der Deckel (5) an dem Montageelement (4) befestigt ist, und das geeignet ist, durch eine progressive Verringerung der eigenen Deformation wenigstens teilweise die Alterung über die Zeit zu kompensieren, die in der Schnittstellendichtung (26) stattfindet, umfasst, **dadurch gekennzeichnet, dass**
das wenigstens eine Fixierungsmittel (6) wenigstens eine Führungsfläche (14) umfasst, auf der ein Riegel (7), welcher das Fixierungsmittel (6) umfasst, sich bewegen kann, um von einer freien Position in eine Verriegelungsposition zu gelangen, indem der Deckel (5) sich dem Montageelement (4) nähert.

2. Elektrisches Gerät (1) nach Anspruch 1, **dadurch gekennzeichnet, dass** der Deckel (5) einerseits eine Platte (20) umfasst, die wenigstens eine Öffnung (31) aufweist, und andererseits wenigstens eine Blende (21), die mit dem wenigstens einen Funktionsblock kompatibel ist und in der wenigstens einen Öffnung (31) angeordnet ist sowie wenigstens eine innere Dichtung (27), die zwischen der Platte (20) und der wenigstens einen Blende (21) angeordnet ist, wobei das Fixierungsmittel (6) auf die wenigstens eine Blende (21) wirkt, so dass die Platte (20) zwischen der wenigstens eine Blende (21) und dem Montageelement (4) gehalten ist, wobei das Pufferelement (3) darüber hinaus ausgelegt ist, durch eine progressive Reduktion seiner Deformation die Alterung, die in der wenigstens einen internen Dichtung (27) stattfindet, zu kompensieren.

3. Elektrisches Gerät (1) nach einem der Ansprüche 1 oder 2, **dadurch gekennzeichnet, dass** das wenigstens eine Fixierungsmittel (6) des Deckels (5) ausgelegt ist, einerseits in einer geschlossenen Position des Riegels (7), den das wenigstens eine Fixierungsmittel (6) umfasst, den Deckel (5) bezüglich des Montageelements (4) direkt zu halten und andererseits in einer freien Position des Riegels (7) den Deckel (5) bezüglich des Montageelements (4) nicht zu halten, wobei der Übergang von der verriegelten Position in die freie Position durch wenigstens eine volle Umdrehung des Riegels (7) um eine Achse (8) im Wesentlichen senkrecht zur Hauptebene (12) stattfindet.

4. Elektrisches Gerät (1) nach Anspruch 3, **dadurch gekennzeichnet, dass** der Riegel (7) im Wesentlichen die Form eines Stiftes (10) annimmt, welcher einen Körper (11) aufweist sowie einerseits einen Kopf (9) für seine Betätigung, wobei der Körper (11) dünner als der Kopf (9) ist, und andererseits eine Spitze (17), welche wenigstens einen Flügel (18) aufweist, der bezüglich des Körpers (11) des Stiftes (10) vorsteht.

5. Elektrisches Gerät (1) nach einem der Ansprüche 3 oder 4, **dadurch gekennzeichnet, dass** das wenigstens eine Fixierungsmittel (6) wenigstens eine Verriegelungsanschlagsfläche (13) für den Riegel (7) umfasst, gegen den sich letzterer abstützen kann, um den Deckel (5) an dem Montageelement (4) in der verriegelten Position zu halten, insbesondere eine Verriegelungsanschlagsfläche (13), die auf dem Pufferelement (3) vorgesehen ist.

6. Elektrisches Gerät (1) nach Anspruch 5, **dadurch gekennzeichnet, dass** das wenigstens eine Fixierungsmittel (6) wenigstens eine Führungsfläche (14) in der Verlängerung der wenigstens einen Verriegelungsanschlagsfläche (13) aufweist, auf der der Riegel (7) sich bis an die wenigstens eine Verriegelungsanschlagsfläche (13) bewegen kann, indem der Deckel (5) sich dem Montageelement (4) nähert.

7. Elektrisches Gerät (1) nach Anspruch 6, **dadurch gekennzeichnet, dass** das Pufferelement (3) die wenigstens eine Verriegelungsanschlagsfläche (13) sowie die wenigstens eine Führungsfläche (14) trägt und die Form eines Aufsteckteils (15) annimmt, das innerhalb des Montagelements (4) angeordnet ist und sich verformt, wenn der Riegel (7) sich in der Verriegelungsposition befindet.

8. Elektrisches Gerät (1) nach Anspruch 7, **dadurch gekennzeichnet, dass** das Aufsteckteil (15) eine Metallscheibe ist.

9. Elektrisches Gerät (1) nach einem der Ansprüche 3 bis 8, **dadurch gekennzeichnet, dass** das wenigstens eine Fixierungsmittel (6) wenigstens eine Kralle (34) und wenigstens eine Aufnahme (35) für die Kralle (34) aufweist, die so angeordnet sind, um die Bewegungsstrecke des Riegels (7) bezüglich des Deckels (5) parallel zu der Achse (8) zu beschränken, insbesondere eine Aufnahme (35) in Form einer kreisförmigen Nut, wobei die Kralle (34) und die Aufnahme (35) für den einen auf Ebene des Riegels (7) und für den anderen auf Ebene des Deckels (5) angebracht sind, insbesondere auf Ebene der Blende (21) oder einer Blende (21), die der Deckel (5) umfasst.

10. Elektrisches Gerät (1) nach Anspruch 9, **dadurch gekennzeichnet, dass** die wenigstens eine Kralle (34) und die wenigstens eine Aufnahme (35) so angeordnet sind, um darüber hinaus die Rotation des Riegels (7) um die Achse (8) im Wesentlichen aus der freien Position zu beschränken.

11. Elektrisches Gerät (1) nach einem der Ansprüche 3 bis 10, **dadurch gekennzeichnet, dass** das wenigstens eine Fixierungsmittel (6) einerseits wenigstens ein Anschlagselement (2), das im Bereich des Riegels (7) vorgesehen ist, und insbesondere auf dem Kopf (9) oder einem Kopf (9) eines Stiftes (10), den der Riegel (7) umfasst, und andererseits wenigstens eine Anschlagsseite (33), die in dem Deckel (5) angebracht ist und in Kontakt mit dem wenigstens einen Anschlagselement (2) kommt, wenn der Riegel (7) sich in der Verriegelungsposition befindet oder eine Drehbewegung mit einer größeren Amplitude ausführt als die, die vom Übergang von der freien Position in die Verriegelungsposition notwendig wäre, umfasst.

12. Elektrisches Gerät (1) nach einem der Ansprüche 3 bis 11, **dadurch gekennzeichnet, dass** die Nuten (19) für die Betätigung mittels eines flachen Werkzeugs der Art Schraubendreher auf der Verriegelung (7) vorgesehen sind, insbesondere auf dem oder einem Kopf (9) eines Stiftes (10), der den Riegel (7) bildet.

13. Elektrisches Gerät (1) nach einem der Ansprüche 2 bis 12, **dadurch gekennzeichnet, dass** die wenigstens eine Blende (21) mittels zweier Fixierungsmittel (6) gehalten ist, die in der Nähe von zwei gegenüberliegenden Rändern der Blende (21) angeordnet und gegeneinander versetzt sind, wobei das elektrische Gerät (1) darüber hinaus zwei Ankoppelmittel (22) von der Blende (21) an die Platte (20) umfasst, die symmetrisch zu zwei Riegeln (7) angeordnet sind und im Wesentlichen jeweils aus einer Klaue mit einem Haken bestehen und sich von der Blende (21) erstrecken, und die ausgelegt ist, um in eine in der Platte (20) vorgesehen Öffnung einzugreifen.

14. Elektrisches Gerät (1) nach einem der Ansprüche 1 bis 13, **dadurch gekennzeichnet, dass** das elektrische Gerät (1) darüber hinaus eine hintere Dichtung (25) im Bereich der Seite des Montageelements (4) aufweist, die ausgelegt ist, in Kontakt mit der Wand zu kommen, wobei die Schnittstellendichtung (26) und die wenigstens eine innere Dichtung (27) einstückig ausgebildet sind, insbesondere an dem Deckel (5) oder an der oder einer Platte (20), die der Deckel (5) umfasst, angeformt sind.

15. Elektrisches Gerät (1) nach einem der Ansprüche 1 bis 14, **dadurch gekennzeichnet, dass** das Montageelement (4) aus einem Gehäuse für die vorspringende Montage des elektrischen Geräts (1) besteht, wobei es eine Aufnahmevertiefung (39) für den wenigstens einen Funktionsblock aufweist, wobei der Riegel (7) mit einem seiner Enden, nämlich die oder eine Spitze (17) im Inneren des Montageelements (4) an eine Zone anstößt, die nicht mit der Aufnahmevertiefung (39) kommuniziert, wobei das Gehäuse darüber hinaus insbesondere Haken für die Verrastung des wenigstens einen Funktionsblocks aufweist.

16. Elektrisches Gerät (1) nach einem der Ansprüche 1 bis 15, **dadurch gekennzeichnet, dass** es eine Vielzahl von eventuell unterschiedlichen Blöcken aufweist, einen einzigen Deckel (5), der eine einzige Platte (20) und eine Vielzahl von Blenden (21) aufweist, wobei jede Blende (21) mit einem Funktionsblock korrespondiert und wobei jede Blende (21) mittels zweier Fixierungsmittel (6) gehalten ist.

## Claims

1. Electrical appliance (1) such as, for example, a switch and/or a socket front for an electrical plug, which is intended to be wall-mounted on or flushmounted in a wall, comprising at least one electrical functional unit, a mounting element (4) for mounting to the wall and fixing the said at least one functional unit, such as a box wall mounting or a flat support for flush mounting, and a cover (5), defining a main plane (12) forming the facade of the electrical appliance (1) that is visible after installation and placed on the mounting element (4), the said electrical appliance (1) comprising an interface seal (26) between the mounting element (4) and the cover (5), and at least one cover (5) fixing means (6) able to fix the said cover (5) directly to the mounting element (4) and comprising at least one buffer element (3) that becomes deformed when the cover (5) is fixed to the mounting element (4) and able at least partially, through a progressive reduction of its own deformation over time, to compensate for the ageing that occurs in the interface seal (26), **characterized in that** the at least one fixing means (6) comprises at least one guide surface (14) on which a lock (7) that the said fixing means (6) comprises can run in order to pass from a free position to a locked position while bringing the cover (5) closer to the mounting element (4).

2. Electrical appliance (1) according to Claim 1, **characterized in that** the cover (5) comprises, on the one hand, a plate (20) having at least one opening (31), and, on the other hand, at least one trim (21) compatible with the at least one functional unit and placed in the said at least one opening (31) and at least one internal seal (27) installed between the said plate (20) and the said at least one trim (21), the fixing means (6) acting on the at least one trim (21) in such a way that the plate (20) is held between the said at least one trim (21) and the mounting element (4), the buffer element (3) being further able, through a progressive reduction in its deformation, to compensate for the ageing that occurs in the at least one internal seal (27).

3. Electrical appliance (1) according to either one of Claims 1 and 2, **characterized in that** the at least one cover (5) fixing means (6) is able, on the one hand, in a position referred to as the locked position of a lock (7) that the at least one fixing means (6) comprises, to hold the cover (5) directly with respect to the mounting element (4) and, on the other hand, in a position referred to as the free position of the said lock (7), not to hold the cover (5) with respect to the mounting element (4), passage from the locked position to the free position taking place via a rotation of the said lock (7) by under one turn about an axis (8) substantially perpendicular to the main plane (12).

4. Electrical appliance (1) according to Claim 3, **characterized in that** the lock (7) essentially adopts the form of a shank (10) having a body (11) and, on the one hand, a head (9) for actuating it, the said body (11) being more slender than the said head (9) and, on the other hand, a tip (17) having at least one wing (18) projecting from the body (11) of the shank (10).

5. Electrical appliance (1) according to either one of Claims 3 and 4, **characterized in that** the at least one fixing means (6) comprises at least one locking bearing surface (13) for the lock (7), against which surface this lock can bear in order to hold the cover (5) to the mounting element (4) in the locked position, notably a locking bearing surface (13) formed on the buffer element (3).

6. Electrical appliance (1) according to Claim 5, **characterized in that** the at least one fixing means (6) comprises at least one guide surface (14) in the continuation of the at least one locking bearing surface (13), on which surface the lock (7) can run as far as the at least one locking bearing surface (13), while bringing the cover (5) closer to the mounting element (4).

7. Electrical appliance (1) according to Claim 6, **characterized in that** the buffer element (3) bears the at least one locking bearing surface (13) and the at least one guide surface (14) and takes the form of an attached part (15) positioned within the mounting element (4) and deformed when the lock (7) is in the locking position.

8. Electrical appliance (1) according to Claim 7, **characterized in that** the attached part (15) is a metal washer.

9. Electrical appliance (1) according to any one of Claims 3 to 8, **characterized in that** the at least one fixing means (6) has at least one lug (34) and at least one housing (35) for the said lug (34), these being formed in such a way as to limit the translational movement of the lock (7) with respect to the cover (5) parallel to the axis (8), notably a housing (35) in the form of a circumferential groove, the lug (34) and the housing (35) being, one of them, formed at the lock (7) and the other at the cover (5), notably at the trim (21) or at a trim (21) that the cover (5) comprises.

10. Electrical appliance (1) according to Claim 9, **characterized in that** the at least one lug (34) and the at least one housing (35) are formed in such a way as also to limit the rotation of the lock (7) about the axis (8) substantially from the free position.

11. Electrical appliance (1) according to any one of Claims 3 to 10, **characterized in that** the at least one fixing means (6) has, on the one hand, at least one stop element (2) formed at the lock (7) and notably under the head (9) or a head (9) of a shank (10) that the lock (7) comprises and, on the other hand, at least one stop face (33), formed in one cover (5) and with which the at least one stop element (2) comes into contact when the lock (7) is in the locking position or when it undergoes a rotational movement of a greater amplitude than that needed when passing from the free position into the locking position.

12. Electrical appliance (1) according to any one of Claims 3 to 11, **characterized in that** slots (19) for actuation by means of a flat tool of the screwdriver type are provided on the lock (7), notably on the or a head (9) of a shank (10) which forms the lock (7).

13. Electrical appliance (1) according to any one of Claims 2 to 12, **characterized in that** the at least one trim (21) is held by two fixing means (6) arranged near two opposite edges of the said trim (21) and offset from one another, the electrical appliance (1) further comprising two catching means (22) for catching the trim (21) to the plate (20), these means being arranged symmetrically with respect to the two locks (7) and each essentially consisting of a tab provided with hooks and extending from the trim (21), which is intended to catch in a hole made in the plate (20).

14. Electrical appliance (1) according to any one of Claims 1 to 13, **characterized in that** the electrical appliance (1) further comprises a rear seal (25), at that face of the mounting element (4) that is intended to be in contact with the wall, the interface seal (26) and the at least one internal seal (27) being produced as a single piece, notably by overmoulding on the cover (5) or on the or a plate (20) that the cover (5) comprises.

15. Electrical appliance (1) according to any one of Claims 1 to 14, **characterized in that** the mounting element (4) consists of a box for wall-mounting the electrical appliance (1), having an accommodating cavity (39) to accommodate the at least one functional unit, the lock (7) reaching, at least in the case of one of its ends, notably the or a tip (17) thereof, into the mounting element (4) in a region that does not communicate with the accommodating cavity (39), the box notably also having hooks for the clip-fastening of the at least one functional unit.

16. Electrical appliance (1) according to any one of Claims 1 to 15, **characterized in that** it has a plurality of functional units, possibly different ones, a single cover (5) comprising a single plate (20) and a plurality of trims (21), each trim (21) corresponding to one functional unit, each trim (21) being held by at least two fixing means (6).
